# EUROPEAN PATENT APPLICATION

(11) **EP 1 107 627 A1**
(43) Date of publication of application: **13.06.2001**
(21) Application number: 99124196.9
(22) Date of filing: 03.12.1999
(51) Int. Cl.: H04Q 7/32

(54) **A method for protecting user data stored in memory of a mobile communication device, particularly a mobile phone**

(71) Applicant: SIEMENS AKTIENGESELLSCHAFT, 80333 München (DE)
(72) Inventor: Rysgaard, Bent, 9220 Aalborg (DK)

(57) **Abstract**

The present invention provides a method for protecting user data stored in a memory of a mobile communication device, particularly a mobile phone, comprising the following steps: inputting an identification string; and associating an internal access key with said identification string to provide access to corresponding user data stored in the user data memory (13) of the mobile communication device (10).

## Description

### BACKGROUND OF THE INVENTION

The present invention relates to a method for protecting user data stored in a memory of a mobile communication device, particularly a mobile phone.

Although applicable to any smart-phone, the present invention and its underlying problems will be discussed with particular reference to GMS mobile phones.

In the current ETSI specifications (ETSI = European Telecommunications Standards Institute), the only user specific storage that is protected is the SIM card itself, e.g. according GSM 11.11. Namely, data stored on the SIM (SIM = subscriber identification module) card are protected by the PIN code (PIN = personal identification number). However, it is not specified in the current ETSI specifications how to protect data held in a SIM-external storage.

A problem occurs when a mobile phone is used by more than one user (SIM) and when this mobile phone contains user specific user data storages like, for example, an email in-box, a fax inbox, spread-sheets, documents, etc.

These storages can be easily protected by passwords, but the storage is not protected against users willing to spend some time getting the stored data. Media like FLASH memories and other integrated circuit storages can be read by means of in-built hardware test interfaces, and PCMCIA based storage can be read from other devices. From the personal computer world it is already known that BIOS passwords are easily avoided by hardware resetting the backup battery of the motherboard, passwords in different programs can be cracked and that hard-drive data can be read directly on the surface of the disc.

### SUMMARY OF THE INVENTION

The present invention provides a a method for protecting user data stored in a memory of a mobile communication device, particularly a mobile phone, according to claim 1.

A particular advantage of the method according to the invention is that there is no access to user data unless the correct SIM has been inserted and the identification string has been entered.

Further, data stored in a way dependent on the correct SIM-data can/may be ciphered. Two "passwords" have/may have to be correct user controlled passwords and/or SIM dependent passwords. The data can be ciphered with SIM dependent keys or other keys.

The principal idea underlying the present invention is to use internal data such as SIM-data stored on the SIM-card as basis for an internal access key wherein said SIM-data are already protected by the PIN code. If user data stored in other storage means, i.e. serial FLASH, EEPROM, etc., are made dependent thereon and only readable if the PIN on the SIM-card is verified, the data accessibility is dependent on the PIN-number being verified on the SIM-card and on the fact that the correct SIM is inserted.

Preferred embodiments of the present invention are listed in the dependent claims.

According to a preferred embodiment, SIM-data stored in the SIM card are read and used as a basis for said access key.

According to a further preferred embodiment, said access key provides access to a coding/decoding algorithm for coding/decoding the user data.

According to a further preferred embodiment, the access key is generated by an access key generation algorithm on the basis of the read out SIM-data.

According to a further preferred embodiment, the SIM-data which is used as the basis for an access key is specified by a primary user.

According to a further preferred embodiment, the SIM-data which is used as the basis for an access key is specified by the network provider of the mobile communication device.

According to a further preferred embodiment, the SIM-data is the International Mobile Subscriber Identity IMSI or SIM card serial number.

According to a further preferred embodiment, the SIM-data which is used as the basis for an access key is specified by the manufacturer of the mobile communication device.

According to a further preferred embodiment, the identification string is the personal identification name and/or the password which are input by a user.

According to a further preferred embodiment, the identification string is the personal unblocking code PUC.

According to a further preferred embodiment, the coding/decoding algorithm is stored in a storage area of the user data memory.

According to a further preferred embodiment, the coding/decoding algorithm is stored in the SIM-card.

According to a further preferred embodiment, the user data memory is subdivided into user data storage areas which are accessible by inputting corresponding passwords.

According to a further preferred embodiment, the identification string is sent to the mobile phone by the network provider as part of a cancellation command specified by the network provider to access the user data memory for deleting user data and/or corresponding identifications stored within the user data memory.

### BRIEF DESCRIPTION OF THE DRAWINGS

The present invention will become more fully understood by the following detailed description of preferred embodiments thereof in conjunction with the accompanying drawings, in which:
- Fig. 1: shows a partial schematic illustration of a smart-phone for explaining an embodiment of the invention;
- Fig. 2: shows a flowchart of the procedure for generation and/or getting an access key;
- Fig. 3: shows a flowchart for the procedure for generation and/or getting of an access key from a SIM card; and
- Fig. 4: shows a flowchart for the procedure when turning on the mobile phone with the access key saved or generated at "power on".

### DESCRIPTION OF THE PREFERRED EMBODIMENTS

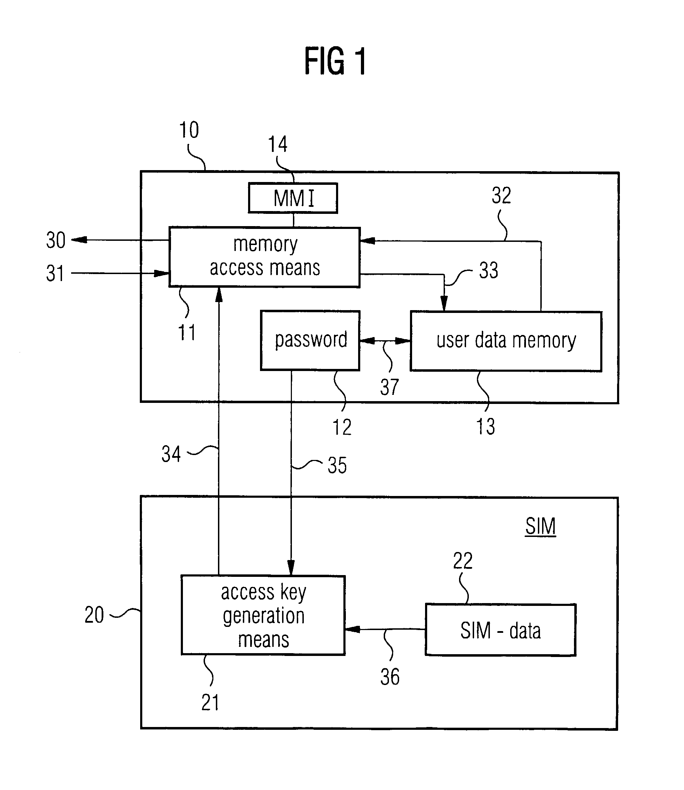

As reference signs in the Fig. 1 10 denotes an electrical device, 11 a memory access means implemented in hardware or software, 12 a password controlled by the user, 13 a user data storage like FLASH disc, EEPROM, etc., 14 an MMI (man-machine-interface, 20 a SIM card, 21 an access key generation means, 22 SIM-data stored in SIM card 20 like IMSI, SIM serial number, etc., 30 an output line for communicating user data out of the electrical device 10 in coded or decoded form, 31 an input line for communicating in user data the electrical device 10 in coded or decoded form, 32 a line for transferring user data for decoding or encoding, 33 a line for transferring user data coded or decoded, 34 an output line of an access key generation means 21 to be used as input to the memory access means 11, 35 a user controlled password signal line, 36 a line for transferring SIM-data like the SIM serial number, etc. (this store can be outside the control of the user), and 37 a signal line for transferring a user controlled password signal.

The user data stored in the user data memory 13 of the electrical device 10 is protected by inputting an identification string, f.e. a number, which is supplied to the memory access means 11 via line 31. Within the memory access means 11 the input identification number is compared with a stored user identification number and then it is verified whether those numbers are identical.

In case that both numbers are identical, i.e. the user is listed and the password is correct, the SIM-data stored in the SIM card 20 is read out and used as the basis for an access key to provide access to the user data stored in the user data memory 13 of the mobile communication device 12. The read out SIM-data stored in the memory area 22 of the SIM card 20 is used as a basis for an access key to a coding/decoding algorithm within the memory access means 11 for coding/decoding the user data.

One way to evaluate, if access is allowed, is to check whether clear text or garbage text is output from the memory.

The access key for the memory access means is either SIM-data stored in the memory area 22 of the SIM-card 20 or may be generated by the access key generation algorithm 21 on the basis of SIM-data read out via line 36. The generated access key is supplied to the memory access means 11 via line 34. The SIM-data stored in the memory area 22 of the SIM card 20 is either specified by the primary user or by the network provider of the mobile communication device. SIM-data specified by the network provider is, for instance, IMSI i.e. the International Mobile Subscriber Identity. Alternatively the SIM-data which is used as a basis for generating an access key might be specified by the manufacturer of the mobile communication device, e.g. the SIM-serial number.

The identification number input by the user is either a personal identification number known to the user or a personal unblocking code PUC. The coding/decoding algorithm of memory access means 11 is either stored in a special storage area of the user data memory 13 or preferably stored in the SIM card 20.

The user data memory 13 is subdivided into different user data storage areas which are accessible by inputting corresponding passwords.

In case that the mobile device is stolen, SIM-data might be sent to the mobile communication device by the network provider as a message as part of a cancellation command specified by the network provider to access the user data memory 13 for deleting the user data and/or corresponding passwords stored within that user data memory 13.

User data can be protected by running the data through the coding/decoding means 11, either by taking existing data from the user data storage 13, coding it and then returning it to the user data storage 13 or by coding new data before storing it.

The coding/decoding means 11 can use an algorithm, like GEA(e.g. GSM GPRS enciphering algorithm, GSM 01.61, if ever allowed), any simple random number generator with the key as seed, etc.

The access key for the coding/decoding algorithm of memory access means 11 is preferably generated on the SIM card 20 with SIM-data input from the SIM-data-storage area 22 via line 36. The key generating algorithm 21 can be like the A3 authentication algorithm or the A8 ciphering key algorithm, which are both available on every GSM SIM, as defined in GSM 11.11.

The SIM card 20 either generates or saves an access key. The access key may be available for the user, the network provider, manufacturer or may be totally unavailable to anything but the access protection algorithm.

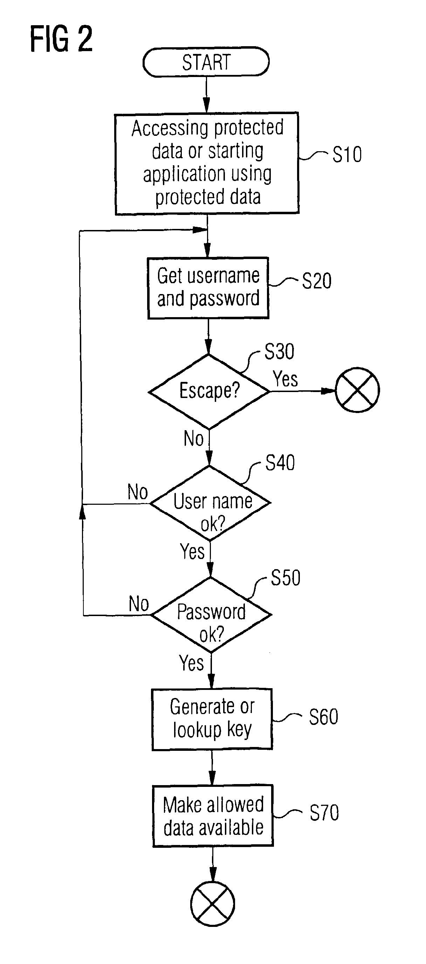

Fig. 2 shows a flowchart of the procedure for generation and/or getting an access key.

After accessing and application start in step S10, username and password are queried in steps S20 to S50. After successful log-in, the access key is internally generated or looked-up (if already existent) in step 60, and the allowed data become available in step 70.

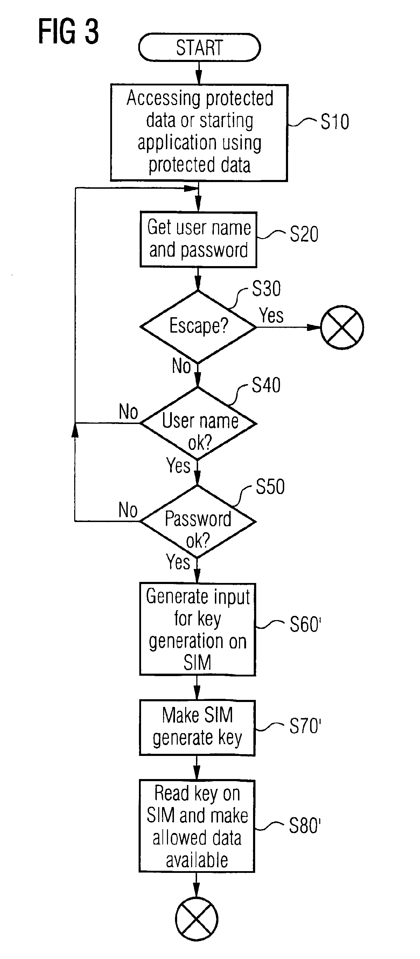

Fig. 3 shows a flowchart for the procedure for generation and/or getting of an access key from a SIM card.

Like in Fig. 2, after accessing and application start in step S10, username and password are queried in steps S20 to S50.

After successful log-in, the access key in step S60'-S70', wherein SIM-data stored in the SIM card are read and used as a basis for said access key, and the allowed data become available in step 80'.

The protected data is accessed either directly or through an application and is protected by more than an access key generated by the SIM card, i.e. the user data is further protected by the user name and by the user password.

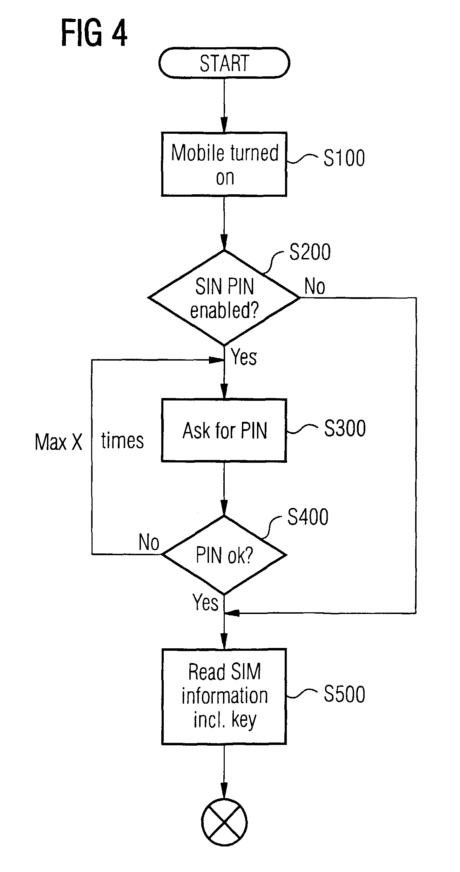

Fig. 4 shows a flowchart for a procedure which is performed when the mobile communication device is turned on and the access key is saved or generated at "power on". When the mobile phone is turned on (step S100), it is checked whether the SIM-PIN is enabled (step S200). In case that the SIM-PIN is enabled it is requested to input a PIN number (step S300) which is then compared with the stored correct PIN number (step S400). In case that the PIN number which has been input by the user is identical to the stored correct PIN number, the SIM-data information is read out of the SIM-data area 22 and on the basis of the read out SIM-data the access key is generated by the access key generation means (step S500). The access key is then used to provide access to the user data stored in the user data memory 13 of the mobile communication device. If the PIN number is incorrect, steps S300 and S300 are repeated n times at maximum.

Although the present invention has been described with respect to preferred embodiments thereof, it should be understood that many modifications can be performed without departing from the scope of the invention as defined by the appended claims.

Particularly, the communication device is not limited to a mobile phone.

## Claims

1. A method for protecting user data stored in a memory of a mobile communication device, particularly a mobile phone, comprising the following steps:
inputting an identification string; and
associating an internal access key with said identification string to provide access to corresponding user data stored in the user data memory (13) of the mobile communication device (10).

2. The method according to claim 1, wherein SIM-data stored in the SIM card are read and used as a basis for said access key.

3. The method according to claim 1 or 2, wherein said access key provides access to a coding/decoding algorithm (11) for coding/decoding the user data.

4. The method according to claim 2 or 3, wherein the access key is generated by an access key generation algorithm (21) on the basis of the read out SIM-data.

5. The method according to one of the preceding claims 2 to 4, wherein the SIM-data which is used as the basis for an access key is specified by a primary user.

6. The method according to one of the preceding claims 2 to 5, wherein the SIM-data which is used as the basis for an access key is specified by the network provider of the mobile communication device (10).

7. The method according to claim 2, wherein the SIM-data is the International Mobile Subscriber Identity IMSI or SIM card serial number.

8. The method according to one of the preceding claims 2 to 7, wherein the SIM-data which is used as the basis for an access key is specified by the manufacturer of the mobile communication device (10).

9. The method according to one of the preceding claims, wherein the identification string is the personal identification name and/or the password which are input by a user.

10. The method according to one of the preceding claims, wherein the identification string is the personal unblocking code PUC.

11. The method according to one of the preceding claims 3 to 10, wherein the coding/decoding algorithm is stored in a storage area of the user data memory (13).

12. The method according to one of the preceding claims 2 to 11, wherein the coding/decoding algorithm is stored in the SIM-card (20).

13. The method according to one of the preceding claims, wherein the user data memory (13) is subdivided into user data storage areas which are accessible by inputting corresponding passwords (12).

14. The method according to claim 14, wherein the identification string is sent to the mobile phone by the network provider as part of a cancellation command specified by the network provider to access the user data memory (13) for deleting user data and/or corresponding identifications stored within the user data memory (13).
